(19) **Europäisches Patentamt / European Patent Office / Office européen des brevets**

(11) **EP 4 748 491 A1**

(12) # EUROPEAN PATENT APPLICATION

(43) Date of publication:
**27.05.2026  Bulletin 2026/22**

(21) Application number: **24215559.6**

(22) Date of filing: **26.11.2024**

(51) International Patent Classification (IPC):
**B01J 19/32** (2006.01)    **F25J 3/04** (2006.01)

(52) Cooperative Patent Classification (CPC):
**B01J 19/32; F25J 3/04;** B01J 2219/3221;
B01J 2219/3222; B01J 2219/32227;
B01J 2219/32237; B01J 2219/32262

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **L'AIR LIQUIDE, SOCIETE ANONYME POUR L'ETUDE ET L'EXPLOITATION DES PROCEDES GEORGES CLAUDE**
**75007 Paris (FR)**
• **CentraleSupélec**
**91190 - Gif sur Yvette (FR)**

(72) Inventors:
• **PERIYAPATTANA, Manasa**
**75007 PARIS (FR)**
• **WATTIAU, Mikael**
**75007 PARIS (FR)**
• **BERSOULLE, Vincent**
**75007 PARIS (FR)**
• **DUVAL, Hervé**
**91190 GIF-SUR-YVETTE (FR)**
• **VINCENT, Lionel**
**75007 PARIS (FR)**

(74) Representative: **Air Liquide**
**L'Air Liquide S.A.**
**Direction de la Propriété Intellectuelle**
**75, Quai d'Orsay**
**75321 Paris Cedex 07 (FR)**

(54) **STRUCTURED PACKING MODULE, COLUMN CONTAINING A MODULE AND AIR SEPARATION APPARATUS CONTAINING A MODULE**

(57)    A structured packing module comprises a plurality of structured packing sheets (L) positioned in an upright, parallel relationship to each other, each structured packing sheet having corrugations formed of alternating peaks and valleys and corrugation sidewalls that extend between adjacent ones of the peaks and valleys, the structured packing sheets being constructed and arranged such that the corrugations of each one of the structured packing sheets extend at an oblique angle to the corrugations of each adjacent one of the structured packing sheets and a plurality of apertures in the structured packing sheets for allowing passage of fluid through the structured packing sheets, the apertures being distributed in each one of the structured packing sheets such that the number of apertures per surface area of the sheets of the module is greater than 40 000 apertures/m$^2$ and the perforation rate of each of the structured packing sheets is greater than 12%.

FIG.5

EP 4 748 491 A1

**Description**

The present invention relates to a structured packing module, a column containing such a module and air separation apparatus containing such a module.

The present invention relates to corrugated structured packing and has particular application in heat and/or mass exchange columns, especially in cryogenic air separation processes, although it also may be used in other heat and/or mass transfer processes that can utilize structured packing.

The term "column section" (or "section") means a zone in a heat and/or mass exchange column filling the column diameter. The top or bottom of a particular section or zone ends at liquid and gaseous (including vapour) phase distributors, respectively.

The term "packing" means solid or hollow bodies of a predetermined size, shape, and configuration used as column internals to provide surface area for the liquid to allow mass and/or heat transfer at the phase interface during the countercurrent flow of two phases. Two broad classes of packing are "random" and "structured".

"Random packing" means packing wherein individual members do not have any particular orientation relative to each other or to the column axis. Random packings are small, hollow structures with large surface area per unit volume that are loaded at random into a column.

"Structured packing" means packing wherein individual members have specific orientation relative to each other and to the column axis. Structured packings usually are made of thin metal foil, expanded metal, or woven wire screens stacked in layers or as spiral windings.

The term "surface area density" means the surface area of the structured packing per unit volume of the structured packing, and usually is expressed in terms of $m^2/m^3$ of the volume occupied by the packing.

In processes such as distillation or direct contact cooling, it is advantageous to use structured packing to promote heat and mass transfer between counter-flowing liquid and gaseous streams. Structured packing, when compared with random packing or trays, offers the benefits of higher efficiency for heat and/or mass transfer with lower pressure drop. It also has a more predictable performance than random packing.

Cryogenic separation of air is carried out by passing liquid and vapour in countercurrent contact through a distillation column. A vapour phase of the mixture ascends with an ever increasing concentration of the more volatile components, e.g. nitrogen, while a liquid phase of the mixture descends with an ever increasing concentration of the less volatile components, e.g., oxygen. Various packings or trays may be used to bring the liquid and vapour phases of the mixture into contact to accomplish mass transfer between the phases.

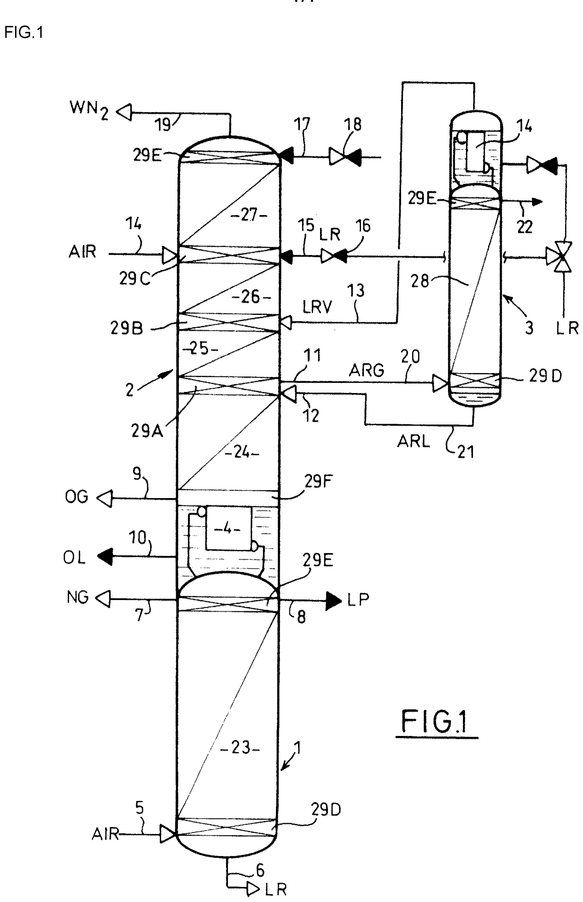

There are many processes for the separation of air by cryogenic distillation into its components, i.e. nitrogen, oxygen, argon, etc... The air distillation plant illustrated in Figure 1 consists of a mean pressure column 1, typically operating under about 6 bars absolute, beneath a low pressure column 2, which typically operates slightly above atmospheric pressure and to which is connected a column 3 for the production of impure argon. A condenser-vaporizer 4 establishes a heat exchange relationship between the vapor at the top of column 1, consisting of nearly pure nitrogen, and the liquid at the bottom portion of column 2, consisting of nearly pure oxygen.

The illustration of Figure 1 is very schematical and essentially aims at showing the fluid inlets/outlets of the plant, as well as the distillation sections that they define.

Thus: column 1 includes two fluid inlets/outlets units, namely at the bottom, an inlet 5 for air to be treated and an outlet 6 for "rich liquid" (oxygen enriched air), and, at the top, an outlet 7 of mean pressure gaseous nitrogen and an outlet 8 of "poor liquid" (nearly pure nitrogen); column 2 includes fluid inlets/outlets units: at the bottom, an outlet 9 for gaseous oxygen and an outlet 10 for liquid oxygen; of a first intermediate level, a gas outlet 11, for an argon rich stream leading to the bottom of column 3, and a return outlet 12 for re-injecting into column 2, liquid from the bottom portion of column 3; at a second intermediate level, an inlet 13 of vaporized "rich liquid" originating from the top of condenser 14 of column 3; at a third intermediate level, an inlet 14 for low pressure blowing air and an inlet 15 for "rich liquid" expanded in a pressure release valve 16; and at the top of the column, an inlet 17 for "poor liquid" which is expanded in a pressure release valve 18 and an outlet 19 for residual gas (impure nitrogen); column 3 for the production of impure argon includes two fluid inlet/outlet units, namely, at the bottom, gas inlet 20 originating from column 2, and a bottom liquid outlet 21 leading to column 2, and, at the top, an outlet 22 for impure produced argon.

These various fluid inlets/outlets define six distillation sections, namely: in mean pressure column 1, a single distillation section 23 between lower inlet/outlet unit 5, 6 and upper inlet/outlet unit 7, 8; in low pressure column 2; a lower distillation section 24 between its lower inlet/outlet unit 9, 10 and its upper inlet/outlet unit 11, 12; immediately above the latter, a first intermediate distillation section 25 between its lower inlet/outlet unit 11, 12 and its upper inlet/outlet unit 13; immediately above the previous one, a second intermediate distillation section 26 between its lower inlet/outlet unit 13 and its upper inlet/outlet unit 14, 15; and an upper distillation section 27 between its lower inlet/outlet unit 14, 15 and its upper inlet/outlet unit 17, 19; with respect to the column for the production of impure argon 3, a single distillation section 28 between the lower inlet/outlet unit 20 and the upper inlet/outlet unit 22.

As will be observed, depending on the distillation section under consideration, a same inlet/outlet unit may be considered either as an upper inlet/outlet unit, or a lower inlet/outlet unit.

Each of the distillation sections 23 to 28 consists of blocks or "packs" of organized lining of the "cross-corrugated" type.

As it is well known, a pack of cross-corrugated packing consists of a bundle of corrugated lamellar sheets each disposed in a generally vertical plane and joined side by side, each lamellar sheet having a generally rectangular shape. The lamellar sheets are obliquely corrugated, and the direction of inclination of the corrugations is reversed from one lamellar sheet to the next one. All the lamellar sheets have the same height, while their length, or horizontal dimension, increases from a minimal value, for an end lamellar sheet, to a maximum value for the median lamellar sheet, then decreases to the same minimal value for the lamellar sheet at the other end. Each section 23 to 28 is a section of continuous packing, i.e., a section consisting of a stack of elementary packs over one another, without any intermediate device for the redistribution of fluid, each elementary pack being rotated 90°, about the axis of the column, with respect to the two adjacent packs.

The distillation sections 24 and 25 on the one hand, 25 and 26 on the other hand, and finally, 26 and 27 are separated from one another by means of a distributor, respectively 29A, 29B, and 29C.

Corrugated and perforated structured packings are widely applied in distillation and absorption columns. They are thin vertical crimped sheets stacked parallel to each other, in such a way that the corrugations in adjacent sheets flow in opposite directions and cross one another from one sheet to another. In cryogenic air separation, these structured packings are known to combine high packing void fraction and high interfacial area, which results in lower pressure drop, higher efficiency and higher capacity when compared to trays. The liquid phase spreads over the packing sheets and eventually forms a thin liquid film whose free surface corresponds to the liquid-vapor interfacial area and affects the mass-transfer and the subsequent separation efficiency of the column. The geometrical features of the packing that contribute to liquid distribution are corrugations and perforations whose characteristic length scale is typically of several orders of magnitude of the liquid film thickness. Perforations let the liquid flow from one side of a corrugated sheet to its other side.

Consequently, they promote liquid exchange between the two sides of the same sheet and avoid channel flow. Perforations do more than liquid transfer, the liquid film on the perforations exhibits complex flow regimes depending on the liquid load per unit surface area of the packing. Some of the flow regimes are: liquid sheet suspended in the perforations, recirculation zones in the stagnation points and in liquid sheets.

Theoretically, these regimes affect the liquid distribution and interfacial mass transfer. The increase in interfacial mass transfer influences the height of a transfer unit (HTU) which is a measure of the separation effectiveness of the packings for a particular separation process. The more efficient the mass transfer (i.e., larger mass transfer coefficient), the smaller the value of HTU.

The perforation rate is calculated by taking the total area of open surface made up of the perforations divided by the total area of the perforated sheet (i.e., including the open surface). The studies of the performance of corrugated and perforated packings with high perforation rate have been limited to metallic gauze packing or porous metallic packings. The mechanism of liquid redistribution is mainly through the phenomenon of capillarity where the liquid film clings and displaces along the fine pores or mesh like structures through the action of capillary pressure.

These packings have high surface wettability characteristics. In spite of their good wetting characteristics, there is a difficulty involved in terms of their cost and fabrication. Thus, their applications are often found in low liquid load rate and deep vacuum applications (processing chemicals, pharmaceuticals). Today the vast majority of cryogenic distillation columns are equipped with corrugated and perforated structured packings.

One of the key design factors in the structured packing column is the liquid distribution in small scale (packing element) and large scale (column). On a packing element scale, the liquid spreading is sensitive to the surface geometry. The liquid redistribution is favored mostly by the inclined corrugated channels, but addition of perforations transfer liquid from one side of a sheet to another and thus decrease the sensitivity of corrugated sheet packings to irrigation irregularity ["Features of Fluid Film Falling on the Corrugated Surface of Structured Packings with Perforations", Gorodilov et al, Theoretical Foundations of Chemical Engineering,2016, vol 50, no 3, pp 325-334].

From a microscopic perspective, liquid distribution mechanisms have been experimentally investigated on a single corrugated sheet similar to the Sulzer 500Y type in [Pavlenko, A. N., Volodin, O. A., & Surtaev, A. S. (2017). "Hydrodynamics in falling liquid films on surfaces with complex geometry". Applied Thermal Engineering, 114, 1265-1274.]. With the irrigation on one side of the sheet, it is found that the liquid flow pattern and the subsequent wetted area depend on the corrugation angle, the surface microtexture, the perforations, and the flow parameters. In addition, the wetted surface area increases with the liquid flow rate. Below a minimum film Reynolds number (Re = $q/v$ where $q$ is the flow rate per unit width of the sheet and v the kinematic viscosity of the liquid), liquid cannot cross the channel crests: it flows along the valley of the irrigated channel and does not fall into the underlying (non-irrigated) channels.

For X and Y - type packings, it is found that the liquid flow pattern and the subsequent wetted area depend on the corrugation angle, the surface microtexture, the perforations, and the flow parameters. In addition, the wetted surface area increases with the liquid flow rate. Below a minimum film Reynolds number ( Re $\cong$ 100 for liquid nitrogen), the liquid cannot cross the channel crests: it flows along the valley of the irrigated channel and does not fall into the underlying (non-irrigated) channels. The transferred flow through the perforations (from the supplied side to the non-supplied one) also depends on the local liquid flow rate and their position on the channel surface (flank, crest, or valley). The liquid is only transferred above a minimum Reynolds number (Re $\cong$ 100-160). Then, the transferred flow rate increases with the local liquid flow rate (on the front of the plate, just upstream of the hole). Perforations may also facilitate the liquid flow from a channel to the underlying ones by multiple transfers, i.e. from the supplied side of the plate to the opposite one and back.

In the literature focusing on liquid film behaviour on the perforation [Xie, H., Hu, J., Dai, G., (2018). "Numerical simulation on flow behavior of twin-liquid films over a vertical plate with an open window". AIChE J. 64 (4), 1458-1468. (2018)], diverse flow patterns such as droplets, liquid sheets exhibiting capillary waves and recirculation zones have been observed. In the liquid sheet regime, the thin liquid film is supported (on the solid surfaces) and unsupported (in the openings or holes) at the same time. This regime is further referred to as "twin film".

Within the unsupported/suspended liquid film, recirculation zones are identified. These recirculation zones enhance mixing of two phases and thus favoring the material transport through the interface. However, it is essential to assess the corrugated and perforated structured packing by operating in the twin film regime. The transition to liquid sheet in the perforation is a function of liquid load or liquid film thickness, geometry of the perforation, and liquid properties.

A momentum balance physical model [Iyer, M., Casalinho, J., Seiwert, J., Wattiau, M., & Duval, H. (2021). "Experimental study of a liquid film flowing over a perforation". AIChE Journal, 67(11)], cited later as [Iyer et al. (2021)], that takes into account all the variables stated earlier, is used to predict the onset of twin film regime in terms of film Reynolds number.

$$\mathrm{Re}_{cr} = \frac{1}{3}\left(\frac{15\,\mathrm{Ka}}{1+\left(\frac{q_2}{q_1}\right)^{\frac{5}{3}}}\left(1-\frac{t}{d}-3^{\frac{1}{3}}\mathrm{Ka}^{-\frac{1}{2}}\left(\frac{d}{l_c}\right)^{-1}\mathrm{Re}_{cr}^{\frac{1}{3}}\left(1+\left(\frac{q_2}{q_1}\right)^{\frac{1}{3}}\right)\right)\right)^{\frac{3}{5}} \quad (1)$$

where $q_1$ and $q_2$ are the liquid flow rates per unit width flowing on each side of a sheet, Ka is the Kapitza number that depends on the physical properties of the liquid, $l_c$ is the capillary length of the liquid, d is the perforation diameter, and $t$ is the sheet thickness.

This model is used to extrapolate $\mathrm{Re}_{cr}$ in case of liquid nitrogen flowing on a corrugated-perforated sheet of type 500Y [Pavlenko, A. N., Volodin, O. A., & Surtaev, A. S. (2017). "Hydrodynamics in falling liquid films on surfaces with complex geometry". Applied Thermal Engineering, 114, 1265-1274.] with the same sheet characteristics, i.e., sheet thickness of 0.2 mm, perforation diameter of 4 mm, rib inclination angle ($\varphi$) of 47° (with respect to horizontal) and crimp angle ($\beta$) of 60° (the crimp angle is defined as the apex angle of the corrugations). The so-called gravity flow angle ($\alpha$) is calculated [Shilkin A, Kenig EY. "A new approach to fluid separation modeling in the columns equipped with structured packings". Chem Eng J. 2005;110(1-3):87-100. (2005)].

$$\alpha = \arctan\left(\frac{\tan\varphi}{\sin\left[\arctan\left(\sin\varphi\cot\left(\frac{\beta}{2}\right)\right)\right]}\right)$$

$\alpha$ is equal to 54°. The gravity component that drives the flow is equal to $g\sin\alpha$, the dimensionless perforation diameter ($\frac{d}{l_c}, l_c = \sqrt{\frac{\sigma}{\rho g}}$ where $\sigma$ is the liquid surface tension, $\rho$ its density, and $g$ the gravity) to 3.4 and the Kapitza number to 4690. For a case of uniform distribution of liquid film on both faces of corrugated and perforated packing, which is the standard operating condition, $\mathrm{Re}_{cr}$ = 170.

With this estimate of $\mathrm{Re}_{cr}$, an extrapolation of liquid load is to perform a test case. The order of magnitude of liquid load obtained from the model to function the corrugated and perforated packings in the twin film regime is higher than the maximum liquid load of this test facility. However, it is important to note that the model is derived under steady state conditions. In the real packings, the liquid film is seldom in the steady state and thus the transition to twin film regime is likely to occur at relatively lower liquid loads than predicted by the model. We also emphasize the fact that the liquid film suspended in the perforations is highly hysteretic [Iyer et al. (2021)] which implies that once formed suspended liquid film in the perforations is maintained even with the reduction in liquid load.

There exists a certain number of publications that focus on increasing the surface specific area to increase the performance of packing: corrugated sheets are alternated by flat perforated sheets throughout the packing to increase the turbulence of the liquid phase which contributes in better mixing liquid and vapor phase [e.g. US4597916].

In WO9319335A1, it is argued to be favorable to equip partially at least one rectification column with the corrugated type structured packings in which the adjacent sheets are in contact and have smooth surfaces between folds. Whilst higher perforation ratios are mentioned, no particular advantage is mentioned to be associated with such ratios.

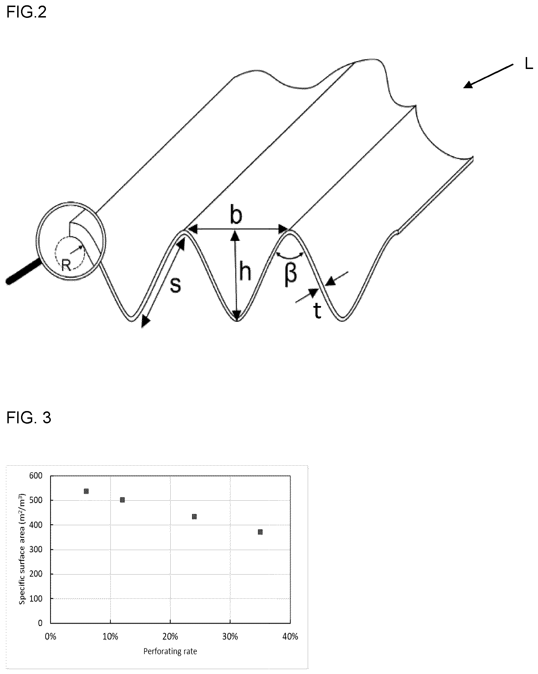

Figure 2 shows a single corrugated sheet, which has a thickness $t$, an amplitude $h$, a crimp angle $\beta$, a distance from one corrugation peak to another $b$, and a length from adjacent corrugation peak to corrugation valley $s$.

According to an object of the invention, there is provided a structured packing module comprising: a plurality of structured packing sheets positioned in an upright, parallel relationship to each other, each structured packing sheet having corrugations formed of alternating peaks and valleys and corrugation sidewalls that extend between adjacent ones of the peaks and valleys, the structured packing sheets being constructed and arranged such that the corrugations of each one of the structured packing sheets extend at an oblique angle to the corrugations of each adjacent one of the structured packing sheets and a specific surface area of the structured packing sheets in the structured packing module is generally greater than 100 $m^2/m^3$; and a plurality of apertures in the structured packing sheets for allowing passage of fluid through the structured packing sheets, the apertures in each one of the structured packing sheets being open to each adjacent one of the structured packing sheets and being substantially unimpeded, the apertures being distributed in each one of the structured packing sheets such that the number of apertures per surface area of the sheets of the module is greater than 40 000 apertures/$m^2$ over at least 40% or at least 60% of the surface of each sheet and the perforation rate of each of the structured packing sheets is greater than 12%.

Experimental results show improved efficiency for modules with sheets with an increased perforation rate, the sheets having a particularly high number of apertures per surface area.

According to optional features:

- the perforation rate of each of the structured packing sheets is greater than 25%, or greater than 35% or greater than 40%.
- the perforation rate of each of the structured packing sheets is less than 25%, or less than 35% or less than 40% or less than 60%.
- the perforation rate of each of the structured packing sheets is between 12 and 30%, preferably between 20 and 28%.
- the number of apertures per surface area of the sheets of the module being greater than 100 000 apertures/$m^2$, or even greater than 120 000 apertures/$m^2$.
- the number of apertures per surface area of the sheets of the module is greater than 40 000 apertures/$m^2$ (or greater than 100 000 apertures/$m^2$, or even greater than 120 000 apertures/$m^2$ but preferably less than 130 000 apertures/$m^2$) over at least 40% or at least 60%, or at least 70%, or at least 80% of the surface of each sheet and substantially uniform over the surface of each sheet
- the perforation rate of each of the structured packing sheets is greater than 12% and substantially uniform over the surface of each sheet.
- the corrugations of each of said packing sheets have an apex angle ($\beta$) in the range of from 70° to 120°.
- each of said apertures has a maximum planar dimension in the range of 1 mm to 3 mm, preferably 1 to 2 mm.
- each of the apertures completely traverses the sheet
- the sheet is made of aluminium or steel, preferably stainless
- the perforation rate of each of the aluminium structured packing sheets is less than 40%
- the perforation rate of each of the steel structured packing sheets is less than 60%.
- the sheets are made of solid metal
- the apertures are circular.

The structured packing module may comprise a plurality of vertically oriented structured packing sheets defining a section height, said section having a base region, comprising up to the lower 50 % of the section height, and a bulk region comprising at least some of the remainder of the section height, wherein the structured packing sheets in the base region have a configuration such that the resistance to gas flow between the sheets in the base region is less than the resistance to gas flow between the sheets in the bulk region. The corrugations may be directed at an angle of between 30 and 60° to the vertical in the bulk region but may have a vertical direction at the base region, as described in EP0707885A1 and shown in Figures 6 and 11 thereof.

At least part of the base region may have proportionally less perforations per m2 than the bulk region. The number of apertures per surface area of the sheets of the module in the bulk region is greater than 40 000 apertures/$m^2$ (or greater than 100 000 apertures/$m^2$, or even greater than 120 000 apertures/$m^2$ but preferably less than 130 000 apertures/$m^2$).

Whereas EP0707885A1 suggests increasing the number of apertures per surface area in the base region, the present invention recommends that the number should be reduced as compared with the bulk region, essentially to improve the rigidity of the module.

For example, in a base region comprising up to the lower 5% of the module height, there may be no perforations.

According to another object of the invention, there is provided a column for separation of a gaseous mixture by distillation or stripping comprising a cylindrical wall and within the wall, a plurality of structured packing module comprising: a plurality of structured packing sheets positioned in an upright, parallel relationship to each other, each structured packing sheet having corrugations formed of alternating peaks and valleys and corrugation sidewalls that extend between adjacent ones of the peaks and valleys, the structured packing sheets being constructed and arranged such that the corrugations of each one of the structured packing sheets extend at an oblique angle to the corrugations of each adjacent one of the structured packing sheets and a specific surface area of the structured packing sheets in the structured packing module is generally greater than 100 $m^2/m^3$; and a plurality of apertures in the structured packing sheets for allowing passage of fluid through the structured packing sheets, the apertures in each one of the structured packing sheets being open to each adjacent one of the structured packing sheets and being substantially unimpeded characterized in that at least one module is a module is according to one of the claims 1 to 7.

According to another object of the invention, there is provided an air separation apparatus using cryogenic distillation comprising a column system comprising a first cryogenic distillation column capable of operating at a first pressure, a second cryogenic distillation column capable of operating at a second pressure lower than the first pressure, the top of the first column being thermally linked to the base of the second column, possibly a third cryogenic distillation column capable of operating at a third pressure lower than the first pressure, means for sending compressed, cooled air at least to the first cryogenic distillation column, means for sending an oxygen enriched liquid from the first cryogenic distillation column to the second cryogenic distillation column, means for sending an nitrogen enriched liquid from the first cryogenic distillation column to the second column, possibly means for sending an argon enriched gas from the second cryogenic distillation column to the third cryogenic distillation column and possibly means for removing an argon rich fluid from the third column, the first and/or second and/or third cryogenic distillation column containing at least one module according to one of claims 1 to 7 and/or the first and/or second and/or third cryogenic distillation column being a column according to claim 8.

According to another object of the invention, there is provided a cryogenic distillation process for the separation of a gaseous mixture using at least one distillation module as described above.

According to another object of the invention, there is provided an air separation process using cryogenic distillation comprising a column system comprising a first cryogenic distillation column capable of operating at a first pressure and a second cryogenic distillation column capable of operating at a second pressure, lower than the first pressure, the top of the first column being thermally linked to the base of the second column, possibly a third cryogenic distillation column capable of operating at a third pressure lower than the first pressure in which cooled and purified air is sent to at least the first column to be separated, an oxygen enriched liquid is sent from the first cryogenic distillation column to the second cryogenic distillation column, a nitrogen enriched liquid is sent from the first cryogenic distillation column to the second column, possibly an argon enriched gas is sent from the second cryogenic distillation column to the third cryogenic distillation column and possibly an argon rich fluid is removed from the third column, the first and/or second and/or third cryogenic distillation column containing at least one module according to one of claims 1 to 7 and/or the first and/or second and/or third cryogenic distillation column being a column according to claim 8.

Preferably the column system comprises the third cryogenic distillation column capable of operating at a third pressure lower than the first pressure and having a top condenser, in which argon enriched gas is sent from the second cryogenic distillation column to the third cryogenic distillation column and an argon rich fluid is removed from the third column, the third cryogenic distillation column containing at least one module according to one of claims 1 to 7 and/or the third cryogenic distillation column being a column according to claim 8, wherein the at least one module is positioned at the top of the third distillation column immediately below the top condenser.

Preferably the first, second, and possibly third cryogenic distillation columns are dimensioned to function at a pressure between 1.5 and 4 bars abs to separate a nominal gaseous air molar flowrate D as a first mode of operation and wherein the gaseous air molar flowrate is reduced to at most 90%D, possibly at most 50%D, or even at most 20% D.

**Goal of invention**

The present invention relates to the development of packing geometry to improve local liquid distribution on the corrugated packing for fluid-fluid applications mainly used in air separation units and absorption columns. We specifically focus on the perforations with the aim to find an optimal rate at which the corrugated packings need to be perforated in order to improve packing performance.

In addition, we aim to maximize the number of perforations operating in the twin film regime to understand the influence of the recirculation zones on interfacial mass transfer.

Figure 3 shows the relation between the perforation rate and the specific surface area.

We tested packed elements made up of sheets according to Figure 2 and perforated with a perforation rate from 0% to 36 % of the total surface area. For perforation rates of each of the structured packing sheets greater than 12%, the number of apertures per surface area of the sheets of the module is greater than 40 000 apertures/$m^2$ over at least 40% or even at least 60% of the surface of each sheet. The diameter of the perforation is 2 mm, and the thickness of the sheets is 0.2 mm. The surface of the metallic elements is smooth and no chemical or abrasive surface treatment is done to alter the surface properties. The sheets are then bent to form the inclined corrugations. The specific surface area of the packing without taking account of the holes is 570 $m^2/m^3$. The specific surface area $a_p = \frac{4\,s\,(1-\tau)}{b\,h}$ [Olujic, Z. "Development of a complete simulation model for predicting the hydraulic and separation performance or distillation columns equipped with structured packings". Chem. Biochem. Eng. Q. 1997;11(1), 31-46. (1997)] is shown in Figure 3 for perforation rate $\tau$ = 6%, 12%, 24% and 35%.

Here, we do not consider holes below 1 mm in diameter as perforations. They show a different flow behavior being inferior to the capillary length. This remark especially applies to gauze and micro-expanded metal sheets.

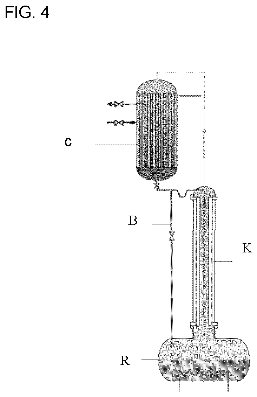

With these configurations, tests were carried out on these packings in a cryogenic test facility (see Figure 4) that is capable of reproducing $N_2/O_2$ distillation at two levels of pressure (1.5 bar and 3 bar) for a wide range of liquid loads. The facility includes a column K containing several modules of structured packing, the column having a top condenser C, a bottom reboiler R and a bypass conduit B.

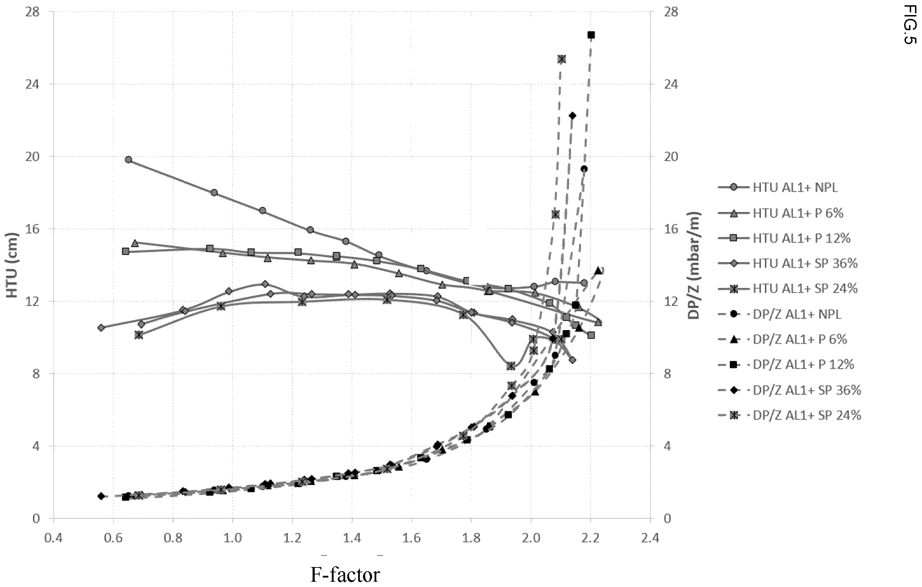

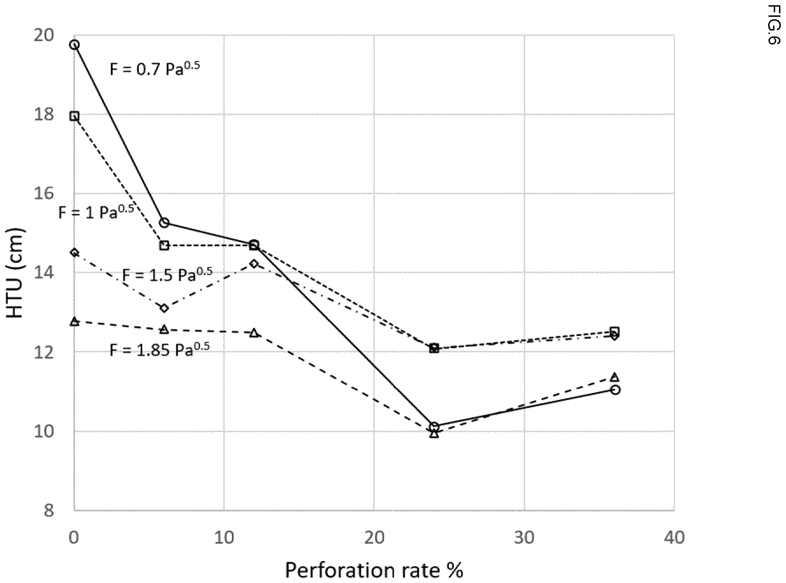

The efficiency of a section of the column is evaluated from a macroscopic quantity known as Height of a Transfer Unit (HTU). The HTU is a function of the specific surface area of the structured packing. Low values of HTU imply that the efficiency of the distillation column is higher and vice versa. The HTU for a perforation rate above 12% was found to be significantly lower than the corrugated structured packings with a lower perforation rate of 0-12%. Contrary to expectations, the phenomenon of hysteresis was not observed when the liquid load was reduced from the maximum. However, the gain in HTU was observed at all liquid loads (see Figures 5 and 6).

The invention will now be described in greater detail with reference to the figures:
Figure 5 shows how HTU and pressure drop vary as a function of the gas F-factor (gas flow factor).

Figure 6 shows how HTU varies as a function of the perforation rate for different gas F-factors, with operating conditions 1.5 bar and L/V = 1 (the ratio of the molar liquid flow rate (L) to the molar vapor flow rate (V))

Figures 7 and 8 show the performance (HTU and DP/Z) of a packing module according to the invention for a reducing F-factor (relative gas load rate).

In Figure 5, the variation of HTU and DP/Z (specific pressure drop) with gas F-factor is shown for a packing module made up of sheets as shown in Figure 2 but with perforation rates of 0% (AL1+ NPL), 6%(AL1+ P 6%), 12%(AL1+ P 12%), 24%(AL1+ P 24%) and 36%(AL1+ P 36%), AL1+ being a code name for the packing and the percentage after P being the perforation rate, the last two types being modules according to the invention since they have perforation rates above 12%, namely 24% and 36%. The structured packing modules tested comprise a plurality of structured packing sheets positioned in an upright, parallel relationship to each other, each structured packing sheet having corrugations formed of alternating peaks and valleys and corrugation sidewalls that extend between adjacent ones of the peaks and valleys. The structured packing sheets are constructed and arranged such that the corrugations of each one of the structured packing sheets extend at an oblique angle to the corrugations of each adjacent one of the structured packing sheets. The specific surface area of the structured packing sheets in the structured packing module is 433 $m^2 /m^3$. A plurality of apertures in the structured packing sheets allow passage of fluid through the structured packing sheets, the apertures in each one of the structured packing sheets being open to each adjacent one of the structured packing sheets and being substantially unimpeded. The number of apertures per surface area of the sheets of the module is greater than 40 000 apertures/$m^2$ and the perforations exist over at least 40% or at least 60% of the surface of each sheet, preferably the whole of each sheet. It can be seen that the HTU values are substantially lower for perforation rates of above 12%. In addition, for higher F-factor values, DP/Z (specific pressure drops) values do not increase as quickly for perforation rates of above 12% as they do for perforation rates of 12% and below.

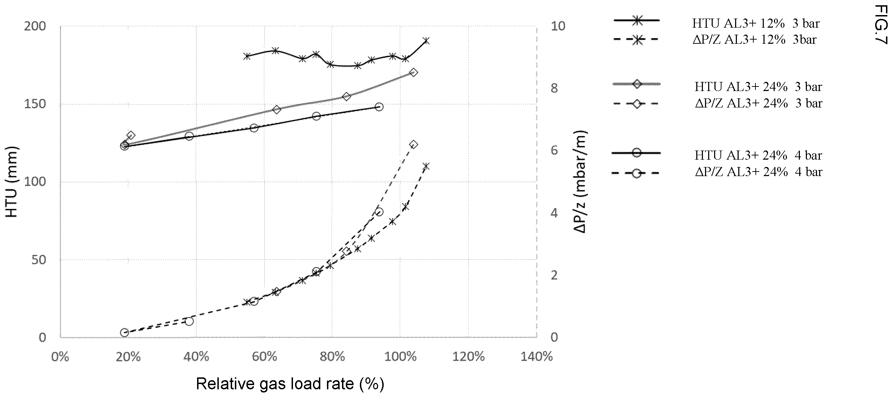

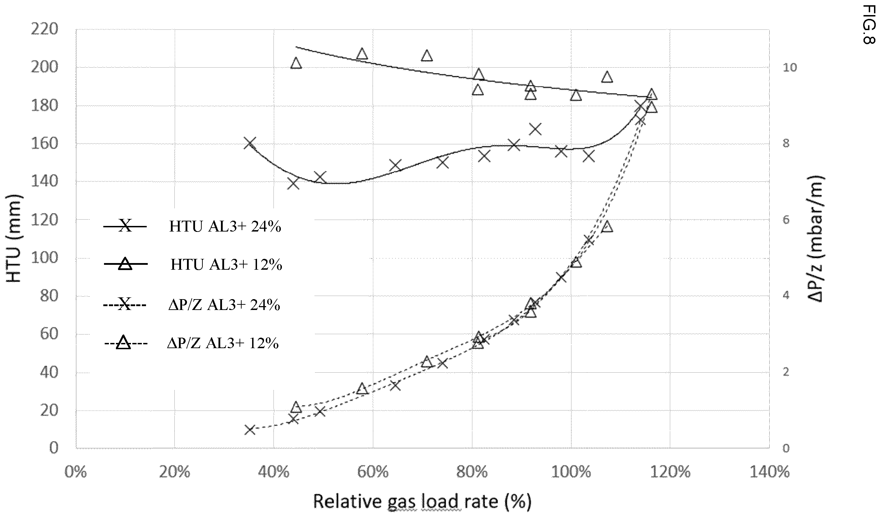

Figure 6 shows the variation of HTU with perforation rate for different F-factor values, the type of perforation being drawn on the graph for comparison purposes. Here again, for perforation rates above 12% (i.e. modules according to the invention with the number of apertures per surface area of the sheets of the module being greater than 40 000 apertures/$m^2$ and perforations over at least 40% or at least 60% of the surface of each sheet) the HTU decreases, irrespective of the F-factor value. Figures 7 and 8 show that for a packing with a 12% perforation rate, the HTU is almost the same for all relative gas load rates for pressures 1.5 - 4 bar. For a packing with a 24% perforation rate, the number of apertures per surface area of the sheets of the module being greater than 40 000 apertures/$m^2$ and the perforation existing over at least 40% or at least 60% of the surface of each sheet, i.e. according to the invention, the HTU decreases down to a relative gas load rate of around 20% indicating that the column can operate with a vastly reduced flowrate, so allowing operation during turndown.

The structured packing modules tested corresponding to code name AL3+ comprise a plurality of structured packing sheets positioned in an upright, parallel relationship to each other, each structured packing sheet having corrugations formed of alternating peaks and valleys and corrugation sidewalls that extend between adjacent ones of the peaks and valleys. The structured packing sheets are constructed and arranged such that the corrugations of each one of the structured packing sheets extend at an oblique angle to the corrugations of each adjacent one of the structured packing sheets.

The specific surface area of the structured packing sheets in the structured packing module is 550 m$^2$ /m$^3$. A plurality of apertures in the structured packing sheets allow passage of fluid through the structured packing sheets, the apertures in each one of the structured packing sheets being open to each adjacent one of the structured packing sheets and being substantially unimpeded.

The invention also applies to the case where the number of apertures per surface area of the sheets of the module is greater than 100 000 apertures/m$^2$, or even greater than 120 000 apertures/m$^2$.

The corrugations of each of said packing sheets may have an apex angle $\beta$ in the range of from 70° to 120°.

These levels of perforation rate have not been explored before, mainly for three reasons.

First, it is not straightforward to get a high perforation rate with standard punching tools used for structured packing. From the perspective of practicality, we did not see benefits in performance between 12% and 6% of perforations, and thus, there was no interest in perforating more. In addition, the formation of perforation chips poses problems during the manufacturing of packing (around 2 billion chips being formed in perforating the packings for a typical air separation unit).

Second, a small perforation rate of around 6-12% seemed to sufficiently help the spreading of the liquid film in a pack, thus, greater amounts have not been explored. Third, from the theoretical perspective, it is counter-intuitive to remove surface and observe a gain in HTU/efficiency (HTU is inversely proportional to the specific area of contact).

These practical and theoretical reasons explain why higher rates of perforations have been less studied in the past. In fact, surprisingly, we observe a gain by perforating more (24-35%). We also observe a threshold effect, i.e., the gain in HTU observed at 24% and 35% of perforation rate is approximately the same. However, considering the practical issue of perforation chip handling, values of around 35% approach the limit of feasibility with punching tools; the good bargain is to choose 24% to take advantage of improved efficiency.

In addition a minimum HTU is observed around 24%.

This gain is caused by the improvement in local liquid redistribution on each sheet leading to improved global redistribution. With visualization experiments, we observed an increase in the area of liquid spreading on the structured packing sheets with 24% and 35% rates of perforation. In addition to increasing the liquid transfer through the holes, they also play the role of obstacles that help distribution in the transverse direction; we can call it a "Galton board" effect. This latter effect would not manifest with larger hole diameters while keeping the same number of holes.

**Presentation and benefits of the invention**

1. This invention shows that the efficiency of the structured packing increases by perforating the corrugated packing by up to 40% from the mass transfer point of view. In the majority of distillation columns, the cumulative packing height reaches several tens of meters. For an air separation unit with argon production, it is typically around 60 m. Therefore, a few percent efficiency gain accounts for considerable material gain.

2. Moreover, increasing the perforation rate decreases the amount of material required, making the column considerably lighter. As most of the air separation columns are manufactured in workshops, this reduced weight aspect can make a considerable difference in terms of transportation, lifting, and civil engineering.

3. Closely spaced perforations on the packing element locally spread the liquid film in a transversal direction. The perforations favor the exchange of liquid between two sides efficiently, and the contact points between two adjacent sheets further channel the liquid in various directions. Several stagnation points, mostly found at the entrance of the perforations, locally slow down the film increasing in liquid retention locally around each perforation.

4. To take advantage of the "Galton board effect", we need densely packed holes, leading to a range of perforation per unit of surface 75000 to 120000 perforations / m$^2$.

5. The easiest perforations to manufacture are circular. To get a sufficient number of perforations, we need small diameters, typically in the range of 1.5 to 3 mm.

6. Increased rate of perforations allows the vapor phase to flow through the narrow passages and thus prevents confinement of the vapor phase.

7. The perforations are made on the metal sheet using a punching tool in a press or a laser cutting tool to obtain burr-free or clean holes. The sheets are then corrugated and cut according to the required size.

8. Thus, except for the tool to get a higher perforation rate, this invention requires little modification to the prior structured packing production lines.

9. The metal sheet is typically between 0.1 and 0.3 mm, preferably between 0.12 and 0.25 out of aluminum alloy, or copper alloy in case of pure oxygen service.

**Claims**

1. Structured packing module comprising: a plurality of structured packing sheets (L) positioned in an upright, parallel relationship to each other, each structured packing sheet having corrugations formed of alternating peaks and valleys and corrugation sidewalls that extend between adjacent ones of the peaks and valleys, the structured packing sheets being constructed and arranged such that the corrugations of each one of the structured packing sheets extend at an oblique angle to the corrugations of each adjacent one of the structured packing sheets and a specific surface area of the structured packing sheets in the structured packing module is generally greater than 100 $m^2/m^3$; and a plurality of apertures in the structured packing sheets for allowing passage of fluid through the structured packing sheets, the apertures in each one of the structured packing sheets being open to each adjacent one of the structured packing sheets and being substantially unimpeded, the apertures being distributed in each one of the structured packing sheets such that the number of apertures per surface area of the sheets of the module is greater than 40 000 apertures/$m^2$ over at least 40% or at least 60% of the surface of each sheet and the perforation rate of each of the structured packing sheets is greater than 12%.

2. Module according to Claim 1 wherein the perforation rate of each of the structured packing sheets (L) is greater than 25%, or even greater than 35%.

3. Module according to Claim 1 wherein the perforation rate of each of the structured packing sheets (L) is between 12 and 30%, preferably between 20 and 28%.

4. Module according to Claim 1 or 2 wherein the number of apertures per surface area of the sheets (L) of the module being greater than 100 000 apertures/$m^2$, or even greater than 120 000 apertures/$m^2$.

5. Module according to any preceding claim, wherein the corrugations of each of said packing sheets (L) have an apex angle in the range of from 70° to 120°.

6. Module according to any preceding claim wherein each of said apertures has a maximum planar dimension in the range of 1 mm to 3 mm, preferably 1 to 2 mm.

7. Module according to any preceding claim wherein said apertures are circular.

8. Column (1,2,3) for separation of a gaseous mixture by distillation or stripping comprising a cylindrical wall and within the wall, a plurality of structured packing module comprising: a plurality of structured packing sheets (L) positioned in an upright, parallel relationship to each other, each structured packing sheet having corrugations formed of alternating peaks and valleys and corrugation sidewalls that extend between adjacent ones of the peaks and valleys, the structured packing sheets being constructed and arranged such that the corrugations of each one of the structured packing sheets extend at an oblique angle to the corrugations of each adjacent one of the structured packing sheets and a specific surface area of the structured packing sheets in the structured packing module is generally greater than 100 $m^2/m^3$; and a plurality of apertures in the structured packing sheets for allowing passage of fluid through the structured packing sheets, the apertures in each one of the structured packing sheets being open to each adjacent one of the structured packing sheets and being substantially unimpeded **characterized in that** at least one module is a module is according to one of the preceding claims.

9. Air separation apparatus using cryogenic distillation comprising a column system comprising a first cryogenic distillation column (1) capable of operating at a first pressure, a second cryogenic distillation column (2) capable of operating at a second pressure lower than the first pressure, the top of the first column being thermally linked to the base of the second column, possibly a third cryogenic distillation column (3) capable of operating at a third pressure lower than the first pressure, means for sending compressed, cooled air at least to the first cryogenic distillation column, means for sending an oxygen enriched liquid (6) from the first cryogenic distillation column to the second cryogenic distillation column, means for sending an nitrogen enriched liquid from the first cryogenic distillation column to the second column, possibly means for sending an argon enriched gas from the second cryogenic distillation column to the third cryogenic distillation column and possibly means for removing an argon rich fluid from the third column, the first and/or second and/or third cryogenic distillation column containing at least one module according to one of claims 1 to 7 and/or the first and/or second and/or third cryogenic distillation column being a column according to claim 8.

10. Cryogenic distillation process for the separation of a gaseous mixture using at least one distillation module according to one of claims 1 to 7.

11. Air separation process using cryogenic distillation according to Claim 10 comprising a column system comprising a first cryogenic distillation column (1) capable of operating at a first pressure and a second cryogenic distillation column (2) capable of operating at a second pressure, lower than the first pressure, the top of the first column being thermally linked to the base of the second column, possibly a third cryogenic distillation column (3) capable of operating at a third pressure lower than the first pressure in which cooled and purified air is sent to at least the first column to be separated, an oxygen enriched liquid (6) is sent from the first cryogenic distillation column to the second cryogenic distillation column, a nitrogen enriched liquid (8) is sent from the first cryogenic distillation column to the second column, possibly an argon enriched gas (20) is sent from the second cryogenic distillation column to the third cryogenic distillation column and possibly an argon rich fluid is removed from the third column, the first and/or second and/or third cryogenic distillation column containing at least one module according to one of claims 1 to 7 and/or the first and/or second and/or third cryogenic distillation column being a column according to claim 8.

12. Process according to claim 11 wherein the column system comprises the third cryogenic distillation column (3) capable of operating at a third pressure lower than the first pressure and having a top condenser, in which argon enriched gas (20) is sent from the second cryogenic distillation column (2) to the third cryogenic distillation column and an argon rich fluid is removed from the third column, the third cryogenic distillation column containing at least one module according to one of claims 1 to 6 and/or the third cryogenic distillation column being a column according to claim 7, wherein the at least one module is positioned at the top of the third distillation column immediately below the top condenser (14).

13. Process according to claim 11 or 12 wherein the first, second and possibly third cryogenic distillation columns (1, 2, 3) are dimensioned to function at a pressure between 1.5 and 4 bars abs to separate a nominal gaseous air molar flowrate D as a first mode of operation and wherein the gaseous air molar flowrate is reduced to at most 90%D, possibly at most 50%D, or even at most 20% D.

. . .

FIG.1

FIG.1

FIG.2

FIG. 3

FIG. 4

FIG.5

FIG.6

FIG.7

EP 4 748 491 A1

FIG.8

17

## EUROPEAN SEARCH REPORT

Europäisches
Patentamt
European
Patent Office
Office européen
des brevets

**Application Number**

EP 24 21 5559

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 014 064 B2 (KOCH GLITSCH LP [US]) 25 May 2021 (2021-05-25) | 1,3,5-9 | INV. B01J19/32 F25J3/04 |
| Y | * column 5, line 6 - column 10, line 19; | 10-13 | |
| A | claims 1,13-20,22 * | 2,4 | |
| | ----- | | |
| Y | US 6 509 082 B1 (MC KEIGUE KEVIN [US] ET AL) 21 January 2003 (2003-01-21) * column 2, lines 45-56 * * column 3, line 44 - column 4, line 67; figure 1 * | 10-13 | |
| | ----- | | |

**TECHNICAL FIELDS SEARCHED (IPC)**

B01J

The present search report has been drawn up for all claims

| Place of search | Date of completion of the search | Examiner |
|---|---|---|
| Munich | 16 May 2025 | Borello, Ettore |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 5559

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | | Publication date |
|---|---|---|---|---|---|
| US 11014064 | B2 | 25-05-2021 | AU | 2018262453 A1 | 24-10-2019 |
| | | | BR | 112019022257 A2 | 16-06-2020 |
| | | | CA | 3060382 A1 | 08-11-2018 |
| | | | CN | 110573246 A | 13-12-2019 |
| | | | EP | 3618952 A1 | 11-03-2020 |
| | | | JP | 7239488 B2 | 14-03-2023 |
| | | | JP | 7583085 B2 | 13-11-2024 |
| | | | JP | 2020518444 A | 25-06-2020 |
| | | | JP | 2023071862 A | 23-05-2023 |
| | | | KR | 20190140450 A | 19-12-2019 |
| | | | MY | 201059 A | 01-02-2024 |
| | | | RU | 2730330 C1 | 21-08-2020 |
| | | | SG | 11201909299Y A | 28-11-2019 |
| | | | TW | 201842964 A | 16-12-2018 |
| | | | US | 2018318787 A1 | 08-11-2018 |
| | | | WO | 2018203224 A1 | 08-11-2018 |
| | | | ZA | 201906672 B | 27-01-2021 |
| US 6509082 | B1 | 21-01-2003 | AT | E290924 T1 | 15-04-2005 |
| | | | CA | 2312214 A1 | 25-12-2000 |
| | | | CN | 1280876 A | 24-01-2001 |
| | | | DE | 60018639 T2 | 09-02-2006 |
| | | | EP | 1063009 A1 | 27-12-2000 |
| | | | JP | 2001038199 A | 13-02-2001 |
| | | | KR | 20010049618 A | 15-06-2001 |
| | | | US | 6509082 B1 | 21-01-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4597916 A
- WO 9319335 A1

- EP 0707885 A1

**Non-patent literature cited in the description**

- **GORODILOV et al.** Features of Fluid Film Falling on the Corrugated Surface of Structured Packings with Perforations. *Theoretical Foundations of Chemical Engineering*, 2016, vol. 50 (3), 325-334
- **PAVLENKO, A. N** ; **VOLODIN, O. A.** ; **SURTAEV, A. S.** Hydrodynamics in falling liquid films on surfaces with complex geometry. *Applied Thermal Engineering*, 2017, vol. 114, 1265-1274
- **XIE, H** ; **HU, J.** ; **DAI, G.** Numerical simulation on flow behavior of twin-liquid films over a vertical plate with an open window. *AIChE J.*, 2018, vol. 64 (4), 1458-1468

- **LYER, M.** ; **CASALINHO, J.** ; **SEIWERT, J.** ; **WATTIAU, M.** ; **DUVAL, H.** Experimental study of a liquid film flowing over a perforation. *AIChE Journal*, 2021, vol. 67 (11)
- **PAVLENKO, A. N.** ; **VOLODIN, O. A.** ; **SURTAEV, A. S**. Hydrodynamics in falling liquid films on surfaces with complex geometry. *Applied Thermal Engineering*, 2017, vol. 114, 1265-1274
- **SHILKIN A** ; **KENIG EY.** A new approach to fluid separation modeling in the columns equipped with structured packings. *Chem Eng J.*, 2005, vol. 110 (1-3), 87-100
- *Chem. Biochem. Eng. Q.*, 1997, vol. 11 (1), 31-46